(19) **Europäisches Patentamt / European Patent Office / Office européen des brevets**

(11) **EP 2 179 572 B1**

(12) **EUROPEAN PATENT SPECIFICATION**

(45) Date of publication and mention
of the grant of the patent:
**23.02.2011 Bulletin 2011/08**

(21) Application number: **08787683.5**

(22) Date of filing: **08.07.2008**

(51) Int Cl.:
*H04L 29/12* (2006.01)          *H04W 8/28* (2009.01)

(86) International application number:
**PCT/FI2008/000084**

(87) International publication number:
**WO 2009/019321 (12.02.2009 Gazette 2009/07)**

(54) **A method and a communications network for updating the routing data of a domain name server**

Verfahren und Kommunikationsnetzwerk zum aktualisieren der Routing-Daten eines Domänennamenservers

Procédé et réseau de communications servant à mettre à jour les données de routage d'un serveur de nom de domaine

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **08.08.2007 FI 20070597**

(43) Date of publication of application:
**28.04.2010 Bulletin 2010/17**

(73) Proprietor: **TeliaSonera Finland Oyj**
**00051 Helsinki (FI)**

(72) Inventors:
• **JALKANEN, Tero**
  **FI-04340 Tuusula (FI)**
• **WECKMAN, Jari**
  **FI-37560 Lempäälä (FI)**

(74) Representative: **Pursiainen, Timo Pekka et al**
**Tampereen Patenttitoimisto Oy**
**Hermiankatu 1 B**
**33720 Tampere (FI)**

(56) References cited:
• **ROSENBERG CISCO SYSTEMS J: "An Architecture and Framework for the Usage of Telephone Numbers with the Session Initiation Protocol (SIP); draft-rosenberg-rai-phone-names-numbers-00.txt" IETF STANDARD-WORKING-DRAFT, INTERNET ENGINEERING TASK FORCE, IETF, CH, 16 October 2006 (2006-10-16), XP015048478 ISSN: 0000-0004**
• **MOCKAPETRIS P.: 'RFC 1034 Domain Names - Concepts and Facilities' NETWORK WORKING GROUP REQUEST FOR COMMENTS November 1987, pages 1 - 55, XP000864262**
• **YI W. ET AL.: 'Performance Analysis of DNS with TTL Value 0 as Location Repository in Mobile Internet' WIRELESS COMMUNICATIONS AND NETWORKING CONFERENCE, 2007. WCNC 2007. IEEE 11 March 2007 - 15 March 2007, pages 3250 - 3255, XP031089084**
• **CHEUNG S. ET AL.: 'A formal-specification based approach for protecting the domain name system' PROCEEDINGS OF INTERNATIONAL CONFERENCE ON DEPENDABLE SYSTEMS AND NETWORKS. IEEE COMPUT. SOC. 25 June 2000 - 28 June 2000, pages 641 - 651, XP000988695**

## Description

### Field of invention

The present invention relates to a method as described in the preamble of claim 1 for updating the routing data of a domain name server. The invention also relates to a communications network as described in the preamble of claim 7.

### Background of invention

Many countries have issued regulations regarding the implementation of number portability in fixed and wireless telephone networks. An EU directive, for example, has been issued about the matter. Number portability means that the customer can change telephone operators without that the telephone number changes. 'Number' here refers to a telephone number of a fixed or wireless telephone network, including the area code. The number portability makes it easier for customers to change operators and therefore increases competition.

In practice, the number portability is implemented in wireless mobile communications networks in such a way that the customer makes a subscription agreement with a desired new operator and receives a new SIM card (Subscriber Identity Module). The old subscription does not stop functioning until the new subscription has been opened. The services, however, are not transferred, but the customer selects services and a subscription type from the portfolio of the new mobile operator. Different countries have different maximum times for the number transfer and for the allowable period of inoperability between the new subscription and the old subscription. In Finland, for example, the delay that the number transfer causes in the delivery of a subscription may be at most five business days. Further, according to the regulations, the period of inoperability between the closing of an old subscription and the opening of a new subscription may be at most ten minutes.

When calls are routed through the IP network (Internet Protocol), the call recipient's IP address needs to be identified based on the MSISDN number (Mobile Station International Subscriber Directory Number). IETF (Internet Engineering Task Force) has standardized a DNS/ENUM functionality (Domain Name System tElephone NUmber Mapping) for this purpose. In practice, it works as follows. First we have a telephone number that we want to identify, for example +358-40-1234567. The telephone number is changed into an ENUM domain name 7.6.5.4.3.2.1.0.4.8.5.3.e164.arpa, which is forwarded to DNS. DNS looks for the equivalent and responds with a URI (Uniform Resource Identifier), for example sip:some@example.net, from which the IP address can be determined by the normal operation of DNS.

As the number of enquiries submitted to DNS servers is huge, a mechanism has been developed to cut the load. DNS's responses are assigned a time-to-live. The time-to-live is called a TTL value. When the enquirer has received a response to the enquiry from the DNS server, the same enquiry will not be made again until the time specified by the TTL value has expired. The value can be adjusted by the administrator of the DNS server in question. Normally, the value may vary from seconds up to weeks.

On account of this mechanism, the changes in DNS are not distributed immediately but with a delay at most equalling the TTL value. For example, the administrator may have assigned the address www.example.net a TTL value of six hours. When the corresponding IP address is changed, the administrator must take into account that certain quarters may have the old IP address saved in the cache memory for up to a period of six more hours before making a new enquiry on the IP address. In other words, they may still use the old IP address for up to six hours after the address has been changed.

The current requirements related to number portability are much shorter than the normal cache update interval. The data received from DNS may thus be outdated for much longer than the 10 minutes mentioned above, and so the current network planning does not make it possible to achieve update periods of less than 10 minutes for telephone numbers.

An obvious solution has been presented to the above problem. The update interval for the responses given by DNS, i.e. the TTL value, is permanently reduced to below the maximum period of inoperability allowed in connection with the number portability. This, however, significantly increases the number of enquiries, which in turn significantly increases delays, traffic and load on the servers that process the enquiries. Such a solution is disclosed for instance inthe internet- Draft "An Architecture and Framework for the Usage of Telephone Numbers with the Session Initiation Protocol (SIP)", J. Rosenberg, 2006. In order that these harmful effects could be reduced, servers and network components need to be updated to be increasingly efficient. This is naturally not a desired trend. Also, it is not at all certain that the current requirements for number portability will not be tightened in the future, which would generate further update needs.

### Summary of invention

An objective with the present invention is to provide a method and a communications network with which at least some of the above problems can be eliminated. A special objective of the invention is to disclose a method and a communications network with which the above need to update servers and networks can be reduced significantly or even eliminated altogether.

The invention is based on the idea that a TTL value is changed only temporarily and according to need on the DNS server. If a centralized database comprises requests for transferring numbers from one operator to another, stepwise reduction of the DNS server's original TTL value will be started. When the TTL value is sufficiently small, for example less than 10 minutes, the telephone number will be updated on the DNS server to be in line with the new domain address, and the TTL value will then be changed back to original.

More specifically, a method according to the present invention is primarily characterized by what is disclosed in the characterizing part of claim 1. A communications network according to the present invention is primarily characterized by what is disclosed in the characterizing part of claim 7.

Major advantages are achieved with the present invention as compared with the methods of the prior art. When the TTL value of the DNS server is only temporarily changed to be sufficiently small, the address updates related to the number portability can be scheduled to be performed at the quietest time of day. The capacity of the network and servers need thus not necessarily be increased, and yet it is possible to go below the maximum period of inoperability.

## List of figures

The invention will be described in greater detail below, with reference to the attached drawings, in which

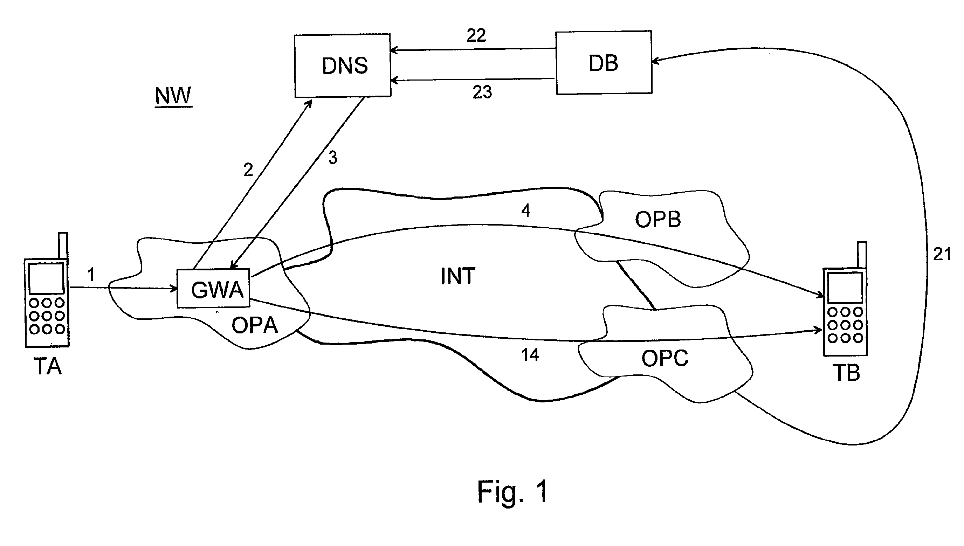

Fig. 1    illustrates a communications network according to a preferred embodiment of the invention.

## Detailed description of invention

Fig. 1 shows a communications network NW in which the invention can be applied. The figure illustrates an example by means of a block diagram.

The more detailed structure and operation of individual blocks are either known *per se* or can be arranged for the purposes of the present invention based on this description. The more detailed implementation is obvious to a man skilled in the art based on the following description, and as the implementation may vary, a more detailed description is not needed.

A communications network NW comprises at least two operators and their communications networks OPA, OPB and OBC. A first operator's communications network OPA may also be a second operator's communications network OPB or a third operator's communications network OPC, in other words, the first operator may be the second or the third operator. A first mobile terminal TA is the first operator's customer and has logged into the first operator's network. Before the number transfer, a second mobile terminal TB is the second operator's customer and therefore logged into the second operator's communications network OPB. After the number transfer, the second mobile terminal TB is the third operator's customer and therefore logged into the third operator's communications network OPC. The first operator's communications network comprises at least one gateway GWA capable of performing an ENUM conversion between the MSISDN number and the ENUM domain name. The operators' communications networks OPA, OPB and OBC are interconnected by means of an interconnection network INT. The interconnection network INT may be, for example, the Internet or IPX/GRX. The communications network NW further comprises at least one domain name server DNS for finding domain addresses and a centralized database server DB managing the number portability.

The database server DB here refers to a server which contains a database comprising transferred telephone numbers and which is used as a data exchange system between the operators for the purposes of number transfer. Based on the data obtained from said database, calls made to a transferred number can be routed directly to the network in which the holder of the number in question is now a subscriber. Preferably, all the telephone numbers transferred have thus been saved on the database server DB. When data related to the number transfer are exchanged between operators, the database server DB is used. A transfer request submitted by a receiving operator to a donor operator also functions as a notice of termination in respect of the donor operator.

Let us assume we are in a situation where the second mobile terminal TB has not changed operators yet and that the first mobile terminal TA wants to contact the second mobile terminal TB. In step 1, the first mobile terminal sends the gateway GWA a request to contact the MSISDN number of the second mobile terminal TB, for example +358-40-1234567. In step 2, said MSISDN number is converted to an INT ENUM domain name 7.6.5.4.3.2.1.0.4.8.5.3.e164.arpa if the Internet, for example, is the network interconnecting the operators' networks, and the domain name is then forwarded to the domain name server DNS. In step 3, the domain name server DNS looks for the equivalent for said ENUM domain name and returns the corresponding URI, or NAPTR record to the gateway GWA. The IP address referring to the second operator's communications network OPB can then be determined on the basis of the URI by the normal operation of DNS. In step 4, a communications connection is set up for a call, for example, between the first mobile terminal TA and the second mobile terminal TB. The call is routed between the first operator's communications network OPA and the second operator's communications network OPB over the interconnecting network INT. If the first and the second operator are one and the same operator, the connection is preferably set up within said operator's communications network.

When the second mobile terminal TB wants to transfer to the third operator's communications network OPC and become this operator's customer, the third operator sends a transfer request to the database server DB in step 21. This acts as an impulse that makes the database server DB start an update process according to the invention, preferably carried out at the quietest time of day, as stated earlier. In step 22, the database server DB reduces the TTL value of the domain name server stepwise. This can be done in various ways according to the invention, for example by always dividing the time by two at intervals indicated by the - TTL value. The TTL value would thus be changed as follows: in a normal situation, the TTL value is X. At time Y, i.e. when said update process begins, the TTL value is changed to X/2. At moment Y+X/2, the TTL value is changed to X/4. At moment Y+X/2+X/4, the TTL value is changed to X/8. This process is continued until the $X/2^N$ value is equal to or smaller than the maximum period of inoperability allowed by authorities - at the moment 10 minutes in Finland. In other words, the update process is terminated at time Z, specified by the equation:

$$Z = Y + \sum_{n=1}^{N} \frac{X}{2^n}$$

The equation concerns only an example in which the time is divided by two at intervals indicated by the TTL value. In other cases the update process' termination time may be indicated by some other equation and a sum yielded by it. If the update process is performed more quickly, i.e. by dividing by a divisor that is bigger than two, the update following moment Y may not be carried out until after moment X, after which the process will be continued at intervals always indicated by the preceding TTL value. In other words, the TTL value is always updated after the interval indicated by the preceding TTL value. The same rule also applies if the update process is carried out with equal cuts, first reducing the original TTL value into less than half. If the first equal cut is less than half of the original TTL value, the update following moment Y can already be carried out after moment X/2, after which the process will be continued at intervals indicated by the valid TTL value.

In step 23 the database server DB updates the routing data of the domain server in respect of the second mobile terminal TB to indicate the third operator's communications network OPC at moment Z. Preferably, the TTL value of the domain name server is simultaneously changed back to the original value X. When the routing data of the domain name server have been updated, there are various ways to proceed. A first preferred option is that the database server DB submits a notification of the changed routing data to operators. A second preferred option is that changes are always made at the same time of the week, for example, which is when the operators learn about their customers' transfer to a receiving operator's network. Other options also exist.

When the second mobile terminal TB has changed operators, it can no longer be reached through the second operator's communications network OPB, even though the MSISDN number has remained unchanged. Steps 1 and 2 here remain unchanged. In step 3, the domain name server DNS finds the equivalent for said ENUM domain name and returns the corresponding IP address to the gateway GWA, the IP address now referring to the third operator's communications network OPC. In step 14, a communications connection is set up for a call between the first mobile terminal TA and the second mobile terminal TB. The call is routed between the first operator's communications network OPA and the third operator's communications network OPC over the interconnecting network INT. If the first and the third operator are one and the same operator, the connection is preferably set up within said operator's communications network.

It is to be understood that the present invention is not limited to the above embodiments but can be varied within the scope of the claims.

**Claims**

1. A method of updating a domain name server's (DNS) routing data when a second mobile terminal (TB) that has been the customer of a second operator's communications network (OPB) changes operators becoming the customer of a third operator's communications network (OPC) while retaining the telephone number, in the method the time-to-live of the responses given to the enquiries sent to the domain name server (DNS) being reduced to a predetermined maximum value and the third operator submitting a transfer request for the change of the second mobile terminal's (TB) operator to a database server (DB), which updates the domain name server's routing data in respect of the second mobile terminal (TB) to indicate the third operator's communications network (OPC), the method being **characterized in that** the method comprises

   - receiving a submission from the third operator of the transfer request for the change of the second mobile terminal's (TB) operator to the database server (DB),
   - as a response to the received submission, carrying out the reduction in a stepwise manner at least down to the predetermined maximum value, so that said stepwise reduction comprises at least one intermediate step for said time-to-live, and,
   - after the data corresponding to the number have been updated, said time-to-live of the responses given to the enquiries sent to the domain name server (DNS) is changed back to original.

2. A method according to claim 1, **characterized in that** said stepwise reduction is carried out by dividing the time-to-live of the responses given to the enquiries sent to the domain name server (DNS) by a divisor that is bigger than one but not bigger than two at intervals indicated by the valid time-to-live until the time-to-live has been reduced at least down to the predetermined maximum value, after which the domain name server's (DNS) routing data are updated after an interval indicated by the latest time-to-live.

3. A method according to claim 1, **characterized in that** said stepwise reduction is carried out by dividing the time-to-live of the responses given to the enquiries sent to the domain name server (DNS) by a divisor that is bigger than two at intervals indicated by the preceding time-to-live until the time-to-live has been reduced at least down to the predetermined maximum value, after which the domain name server's (DNS) routing data are updated after an interval indicated by the latest time-to-live.

4. A method according to claim 1, **characterized in that** said stepwise reduction is carried out by cutting the time-to-live of the responses given to the enquiries sent to the domain name server (DNS) by a period of standard length at intervals indicated by the valid time-to-live if the first reduction does not cut the original value into less than half, until the time-to-live has been reduced at least down to the predetermined maximum value, after which the domain name server's (DNS) routing data are updated after an interval indicated by the latest time-to-live.

5. A method according to claim 1, **characterized in that** said stepwise reduction is carried out by cutting the time-to-live of the responses given to the enquiries sent to the domain name server (DNS) by a period of standard length at intervals indicated by the preceding time-to-live if the first reduction cuts the original value into less than half, until the time-to-live has been reduced at least down to the predetermined maximum value, after which the domain name server's (DNS) routing data are updated after an interval indicated by the latest time-to-live.

6. A method according to claim 1, 2, 3, 4 or 5, **characterized in that** said reduction in the time-to-live of the responses given to the enquiries sent to the domain name server (DNS) is scheduled to be performed at the quietest time of day after the third operator has submitted a request for the change of the second mobile terminal's (TB) operator to the database server (DB).

7. A communications network (NW) comprising at least

 - a second operator's communications network (OPB),
 - a third operator's communications network (OPC),
 - a second mobile terminal (TB) logged into the second operator's communications network (OPB),
 - a domain name server (DNS) and
 - a database server (DB),
 - the communications network (NW) comprising means (OPC) for submitting a number transfer request to the database server (DB), means for reducing the time-to-live of the responses given to the enquiries sent to the domain name server (DNS) to a predetermined maximum value, and means (DB) for updating the data corresponding to the number to the domain name server (DNS) such that they indicate the third operator's communications network (OPC),
 **characterized in that**
 - the communication network comprises means (DB) for stepwise reduction the time-to-live of the responses given to the enquiries sent to the domain name server (DNS) at least down to the predetermined maximum value when the transfer request has been submitted, the stepwise reduction comprising at least one intermediate step for said time-to-live, and
 - means (DB) for changing the time-to-live of the responses given to the enquiries sent to the domain name server (DNS) back to original when the data corresponding to the number have been updated.

**Patentansprüche**

1. Verfahren zur Aktualisierung von Routing-Daten eines Domainnameservers (DNS), wenn ein zweites mobiles Endgerät (TB), das der Kunde eines Kommunikationsnetzes (OPB) eines zweiten Netzbetreibers war, die Netzbetreiber wechselt und Kunde eines Kommunikationsnetzes (OPC) eines dritten Netzbetreibers unter Beibehaltung der Telefonnummer wird, wobei in dem Verfahren die Lebensdauer der Antworten auf die an den Domainnameserver (DNS) gesendeten Anfragen auf einen vorbestimmten Maximalwert reduziert wird und der dritte Netzbetreiber eine Transferanforderung für den Wechsel des Netzbetreibers des zweiten mobilen Endgeräts (TB) an einen Datenbankserver (DB) einsendet, welcher die Routing-Daten des Domainnameservers in Bezug auf das zweite mobile Endgerät (TB) derart aktualisiert, dass sie das Kommunikationsnetz (OPC) des dritten Netzbetreibers angeben, wobei das Verfahren **dadurch gekennzeichnet ist, dass** es Folgendes umfasst:

 - Empfangen einer Einsendung der Transferanforderung vom dritten Netzbetreibers für den Wechsel des Netzbetreibers des zweiten mobilen Endgeräts (TB) an den Datenbankserver (DB),
 - als Antwort auf die empfangene Übermittlung Durchführen der schrittweisen Reduzierung zumindest bis hinab zu dem vorbestimmten Maximalwert derart, dass die schrittweise Reduzierung mindestens einen Zwischenschritt für die Lebensdauer umfasst, und,

- nachdem die der Nummer entsprechenden Daten aktualisiert wurden, wird die Lebensdauer der Antworten auf die an den Domainnameserver (DNS) gesendeten Anfragen zu dem ursprünglichen Wert zurückgewechselt.

2. Verfahren nach Anspruch 1, **dadurch gekennzeichnet, dass** die schrittweise Reduzierung durch Dividieren der Lebensdauer der Antworten auf die an den Domainnameserver (DNS) gesendeten Anfragen durch einen Divisor, der größer als eins, aber nicht größer als zwei ist, in durch die gültige Lebensdauer angegebenen Intervallen durchgeführt wird, bis die Lebensdauer zumindest bis hinab zu dem vorbestimmten Maximalwert reduziert wurde, wobei danach die Routing-Daten des Domainnameservers (DNS) nach einem durch die letzte Lebensdauer angegebenen Intervall aktualisiert werden.

3. Verfahren nach Anspruch 1, **dadurch gekennzeichnet, dass** die schrittweise Reduzierung durch Dividieren der Lebensdauer der Antworten auf die an den Domainnameserver (DNS) gesendeten Anfragen durch einen Divisor, der größer als zwei ist, in durch die vorhergehende Lebensdauer angegebenen Intervallen durchgeführt wird, bis die Lebensdauer zumindest bis hinab zu dem vorbestimmten Maximalwert reduziert wurde, wobei danach die Routing-Daten des Domainnameservers (DNS) nach einem durch die letzte Lebensdauer angegebenen Intervall aktualisiert werden.

4. Verfahren nach Anspruch 1, **dadurch gekennzeichnet, dass** die schrittweise Reduzierung durch Kürzen der Lebensdauer der Antworten auf die an den Domainnameserver (DNS) gesendeten Anfragen um einen Zeitraum mit Standarddauer und in durch die gültige Lebensdauer angegebenen Intervallen durchgeführt wird, wenn die erste Reduzierung nicht den ursprünglichen Wert in weniger als die Hälfte kürzt, bis die Lebensdauer zumindest bis hinab zu dem vorbestimmten Maximalwert reduziert wurde, wobei danach die Routing-Daten des Domainnameservers (DNS) nach einem durch die letzte Lebensdauer angegebenen Intervall aktualisiert werden.

5. Verfahren nach Anspruch 1, **dadurch gekennzeichnet, dass** die schrittweise Reduzierung durch Kürzen der Lebensdauer der Antworten auf die an den Domainnameserver (DNS) gesendeten Anfragen um einen Zeitraum mit Standarddauer und in durch die vorhergehende Lebensdauer angegebenen Intervallen durchgeführt wird, wenn die erste Reduzierung den ursprünglichen Wert in weniger als die Hälfte kürzt, bis die Lebensdauer zumindest bis hinab zu dem vorbestimmten Maximalwert reduziert wurde, wobei danach die Routing-Daten des Domainnameservers (DNS) nach einem durch die letzte Lebensdauer angegebenen Intervall aktualisiert werden.

6. Verfahren nach Anspruch 1, 2, 3, 4 oder 5, **dadurch gekennzeichnet, dass** die Reduzierung der Lebensdauer der Antworten auf die an den Domainnameserver (DNS) gesendeten Anfragen derart zeitlich geplant wird, dass sie zu der ruhigsten Tageszeit durchgeführt wird, nachdem der dritte Netzbetreiber eine Anforderung für den Wechsel des Netzbetreibers des zweiten mobilen Endgeräts (TB) an den Datenbankserver (DB) übermittelt hat.

7. Kommunikationsnetz (NW) umfassend zumindest

- ein Kommunikationsnetz (OPB) eines zweiten Netzbetreibers,
- ein Kommunikationsnetz (OPC) eines dritten Netzbetreibers,
- ein zweites mobiles Endgerät (TB), das in das Kommunikationsnetz (OPB) des zweiten Netzbetreibers eingeloggt ist,
- einen Domainnameserver (DNS) und
- einen Datenbankserver (DB),
- wobei das Kommunikationsnetz (NW) Folgendes umfasst: Mittel (OPC) zur Einsendung einer Nummertransferanforderung an den Datenbankserver (DB), Mittel zur Reduzierung der Lebensdauer der Antworten auf die an den Domainnameserver (DNS) gesendeten Anfragen auf einen vorbestimmten Maximalwert, und Mittel (DB) zur Aktualisierung der der Nummer des Domainnameservers (DNS) entsprechenden Daten derart, dass sie das Kommunikationsnetz (OPC) des dritten Netzbetreibers angeben, **dadurch gekennzeichnet, dass**

- das Kommunikationsnetz Mittel (DB) zur schrittweisen Reduzierung der Lebensdauer der Antworten auf die an den Domainnameserver (DNS) gesendeten Anfragen zumindest bis hinab zu dem vorbestimmten Maximalwert umfasst, wenn die Transferanforderung übermittelt wurde, wobei die schrittweise Reduzierung mindestens einen Zwischenschritt für die Lebensdauer umfasst, und

- Mittel (DB) zum Zurückwechseln der Lebensdauer der Antworten auf die an den Domainnameserver (DNS) gesendeten Anfragen zu dem ursprünglichen Wert, wenn die der Nummer entsprechenden Daten aktualisiert wurden.

## Revendications

1. Procédé de mise à jour de données de routage d'un serveur de nom de domaine (DNS) lorsqu'un second terminal mobile (TB) qui a été le client d'un réseau de communications d'un deuxième opérateur (OPB) change d'opérateur et devient le client du réseau de communications d'un troisième opérateur (OPC) tout en conservant le numéro de téléphone, dans le procédé la durée de vie des réponses apportées aux interrogations envoyées au serveur de nom de domaine (DNS) étant réduite à une valeur maximale prédéterminée et le troisième opérateur soumettant une demande de transfert pour le changement d'opérateur du second terminal mobile (TB) à un serveur de base de données (DB) qui met à jour les données de routage du serveur de nom de domaine concernant le second terminal mobile (TB) pour indiquer le réseau de communications du troisième opérateur (OPC), le procédé étant **caractérisé en ce que** le procédé comprend

   - réception par le serveur de base de données (DB) d'une soumission de la demande de transfert émanant du troisième opérateur pour le changement d'opérateur du second terminal mobile (TB),
   - en réponse à la soumission reçue, exécution de la réduction graduelle au moins jusqu'à la valeur maximale prédéterminée, de manière à ce que ladite réduction graduelle comprenne au moins une étape intermédiaire pour ladite durée de vie et
   - après que les données correspondant au numéro ont été mises à jour, ladite durée de vie des réponses apportées aux interrogations envoyées au serveur de nom de domaine (DNS) est remise à sa valeur initiale.

2. Procédé selon la revendication 1, **caractérisé en ce que** ladite réduction graduelle est exécutée en divisant la durée de vie des réponses apportées aux interrogations envoyées au serveur de nom de domaine (DNS) par un diviseur qui est supérieur à un mais pas supérieur à deux à des intervalles indiqués par la durée de vie valide jusqu'à ce que la durée de vie ait été réduite au moins à la valeur maximale prédéterminée, après quoi les données de routage du serveur de nom de domaine (DNS) sont mises à jour après un intervalle indiqué par la dernière durée de vie.

3. Procédé selon la revendication 1, **caractérisé en ce que** ladite réduction graduelle est exécutée en divisant la durée de vie des réponses apportées aux interrogations envoyées au serveur de nom de domaine (DNS) par un diviseur qui est supérieur à deux à des intervalles indiqués par la durée de vie précédente jusqu'à ce que la durée de vie ait été réduite au moins à la valeur maximale prédéterminée, après quoi les données de routage du serveur de nom de domaine (DNS) sont mises à jour après un intervalle indiqué par la dernière durée de vie.

4. Procédé selon la revendication 1, **caractérisé en ce que** ladite réduction graduelle est exécutée en soustrayant à la durée de vie des réponses apportées aux interrogations envoyées au serveur de nom de domaine (DNS) une période de longueur standard et à des intervalles indiqués par la durée de vie valide si la première réduction ne réduit pas la valeur originale de plus de la moitié, jusqu'à ce que la durée de vie ait été réduite au moins à la valeur maximale prédéterminée, après quoi les données de routage du serveur de nom de domaine (DNS) sont mises à jour après un intervalle indiqué par la dernière durée de vie.

5. Procédé selon la revendication 1, **caractérisé en ce que** ladite réduction graduelle est exécutée en soustrayant à la durée de vie des réponses apportées aux interrogations envoyées au serveur de nom de domaine (DNS) une période de longueur standard à des intervalles indiqués par la durée de vie précédente si la première réduction ne réduit pas la valeur originale de plus de la moitié, jusqu'à ce que la durée de vie ait été réduite au moins à la valeur maximale prédéterminée, après quoi les données de routage du serveur de nom de domaine (DNS) sont mises à jour après un intervalle indiqué par la dernière durée de vie.

6. Procédé selon la revendication 1, 2, 3, 4 ou 5, **caractérisé en ce que** ladite réduction de la durée de vie des réponses apportées aux interrogations envoyées au serveur de nom de domaine (DNS) est programmée pour être effectuée au moment le plus calme de la journée après que le troisième opérateur a soumis au serveur de base de données (DB) une demande de changement d'opérateur du second terminal mobile (TB).

7. Réseau de communications (NW) comprenant au moins

   - un réseau de communications d'un deuxième opérateur (OPB),
   - un réseau de communications d'un troisième opérateur (OPC),
   - un second terminal mobile (TB) connecté au réseau de communications du deuxième opérateur (OPB),
   - un serveur de nom de domaine (DNS) et
   - un serveur de base de données (DB),
   - le réseau de communications (NW) comprenant un moyen (OPC) pour soumettre une demande de transfert de numéro au serveur de base de données (DB), un moyen pour réduire la durée de vie des réponses apportées aux interrogations envoyées au serveur de nom de domaine (DNS) à une valeur maximale prédéterminée et un moyen (DB) pour mettre à jour les données correspondant au numéro sur le serveur de nom de domaine (DNS) de manière à ce qu'elles indiquent le réseau de communications du troisième opérateur (OPC),
**caractérisé en ce que**
- le réseau de communications comprend un moyen (DB) pour la réduction graduelle de la durée de vie des réponses apportées aux interrogations envoyées au serveur de nom de domaine (DNS) au moins jusqu'à la valeur maximale prédéterminée lorsque la demande de transfert a été soumise, la réduction graduelle comprenant au moins une étape intermédiaire pour ladite durée de vie, et
- un moyen (DB) pour remettre à sa valeur initiale la durée de vie des réponses apportées aux interrogations envoyées au serveur de nom de domaine (DNS) une fois que les données correspondant au numéro ont été mises à jour.

Fig. 1

EP 2 179 572 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. Rosenberg.** *An Architecture and Framework for the Usage of Telephone Numbers with the Session Initiation Protocol,* 2006